Europäisches Patentamt

European Patent Office

Office européen des brevets

(19)

(11) Publication number: **0 054 295**
**A2**

(12) **EUROPEAN PATENT APPLICATION**

(21) Application number: **81110430.6**

(22) Date of filing: **14.12.81**

(51) Int. Cl.³: **G 02 B 7/18**

(30) Priority: **16.12.80 JP 179533/80**

(43) Date of publication of application:
**23.06.82 Bulletin 82/25**

(84) Designated Contracting States:
**DE FR GB SE**

(71) Applicant: **SUMITOMO ELECTRIC INDUSTRIES
LIMITED**
No. 15, Kitahama 5-chome Higashi-ku
Osaka-shi Osaka(JP)

(72) Inventor: **Ono, Kimizo Sumitomo Elec. Industries Ltd.**
Osaka Works No.1-3, Shimaya 1-chome
Konohana-ku Osaka-shi Osaka(JP)

(72) Inventor: **Takenaka, Shinya Sumitomo, Elec. Industries
Ltd.**
Osaka Works No.1-3, Shimaya 1-chome
Konohana-ku Osaka-shi Osaka(JP)

(72) Inventor: **Sunago, Katsuyoshi Sumitomo Elec.
Industries Ltd.**
Osaka Works No.1-3, Shimaya 1-chome
Konohana-ku Osaka-shi Osaka(JP)

(72) Inventor: **Iwamoto, Tomio Sumitomo Elec. Industries
Ltd.**
Osaka Works No.1-3, Shimaya 1-chome
Konohana-ku Osaka-shi Osaka(JP)

(72) Inventor: **Matsuki, Syuji Sumitomo, Elec. Industries
Ltd.**
Osaka Works No.1-3, Shimaya 1-chome
Konohana-ku Osaka-shi Osaka(JP)

(74) Representative: **Patentanwälte Grünecker,
Dr.Kinkeldey Dr.Stockmair, Dr.Schumann,Jakob,
Dr.Bezold Meister, Hilgers, Dr.Meyer-Plath**
Maximilianstrasse 43
D-8000 München 22(DE)

(54) Light conducting mirror holder.

(57) A mirror is mounted at the apex of a bend in a light conducting pipe via a seat portion engaging the front surface of the mirror and defining a reflecting surface, a packing disposed against the rear surface, and a screw-on cap for compressing the packing uniformly against said rear surface.

FIG. 2(a)

# LIGHT CONDUCTING MIRROR HOLDER

## BACKGROUND OF THE INVENTION

### Field of the Invention

This invention relates to a mirror holder for mounting a light bending mirror at the bend in a light conducting pipe which is used to conduct a laser beam or the like.

### Prior Art

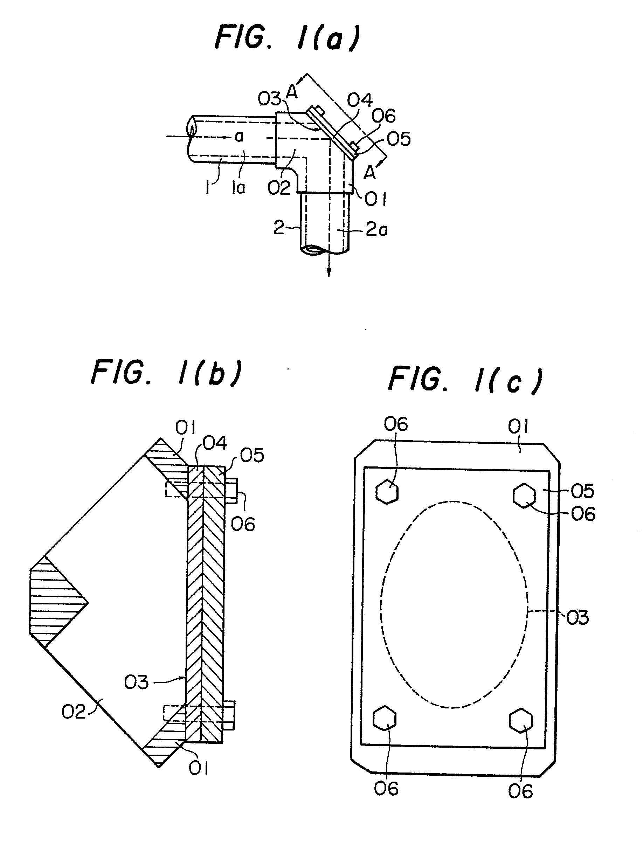

The conventional bend in a light conducting pipe is as shown in Fig. 1(a), wherein a mirror holder 01 is connected to the ends of light conducting pipes 1 and 2 set perpendicular to each other, for instance in order to perpendicularly bend the direction of a light beam. A shown in Fig. 1(b), the mirror holder forms a bent path 02 which is communicated with light conducting paths 1a and 2a, and has a reflecting surface 03 which forms a 45° angle with respect to the optical axis of each of the pipes 1 and 2 so as to perpendicularly bend a light beam a incident to the bent path 02. The reflecting surface 03 is typically elliptic as shown in Fig. 1(c). The reflecting surface 03 is provided by a mirror which is larger in area than the elliptic reflecting surface 03. The mirror is fixedly secured to the mirror holder 01 with a retaining plate 05 and four screws 06.

When the mirror providing the reflecting surface is secured to the mirror holder, it is considerably difficult to uniformly tighten the screws, and accordingly it is difficult to set the mirror in such a manner that the mirror is uniformly pressed down. Therefore, the reflection angle of the mirror may include an error, which makes it impossible to accurately bend an incident light beam at a predetermined angle. In addition, replacement of the mirror takes a relatively long time because it is achieved by unscrewing and rescrewing the screws 06.

## SUMMARY OF THE INVENTION

Accordingly, an object of this invention is to eliminate the above-described difficulties accompanying a conventional mirror holder.

More specifically, an object of the invention is to provide a mirror holder in which the mirror placed in the reflecting surface is set accurately at a desired angle with the rear surface of the mirror being pressed uniformly.

The foregoing object and other objects of the invention have been achieved by the provision of a mirror holder for a light bending mirror at the bend of a light conducting pipe adapted to conduct a light beam, which comprises: a holder body having a bent path both ends of which are communicated with respective light conducting paths, and a mirror mounting portion for mounting said mirror at the corner of the bent path;

a cap which is screwed on the mirror mounting portion; and a packing which is disposed between the mounted mirror and the cap, so as to uniformly press the rear surface of the mirror as the cap is screwed on the mirror mounting portion.

BRIEF DESCRIPTION OF THE DRAWINGS

The nature, principle and utility of the invention will become more apparent from the following detailed description when read in conjunction with the accompanying drawings, in which:

Fig. 1(a) is a side view of a conventional mirror holder coupled to light conducting pipes;

Fig. 1(b) is a sectional view taken along the arrow line A-A in Fig. 1(a);

Fig. 1(c) is a diagram as viewed along the arrow line A-A in Fig. 1(a);

Fig. 2(a) is a sectional view of the mirror holder according tho this invention;

Fig. 2(b) is a diagram as viewed along the arrow line B-B in Fig. 2(b); and

Fig. 2(c) is a diagram as viewed along the arrow line C-C in Fig. 2(a).

## DETAILED DESCRIPTION OF THE INVENTION

This invention will be described with reference to a mirror which is mounted to perpendicularly bend a laser beam or the like which travels in a straight line along a light conducting pipe.

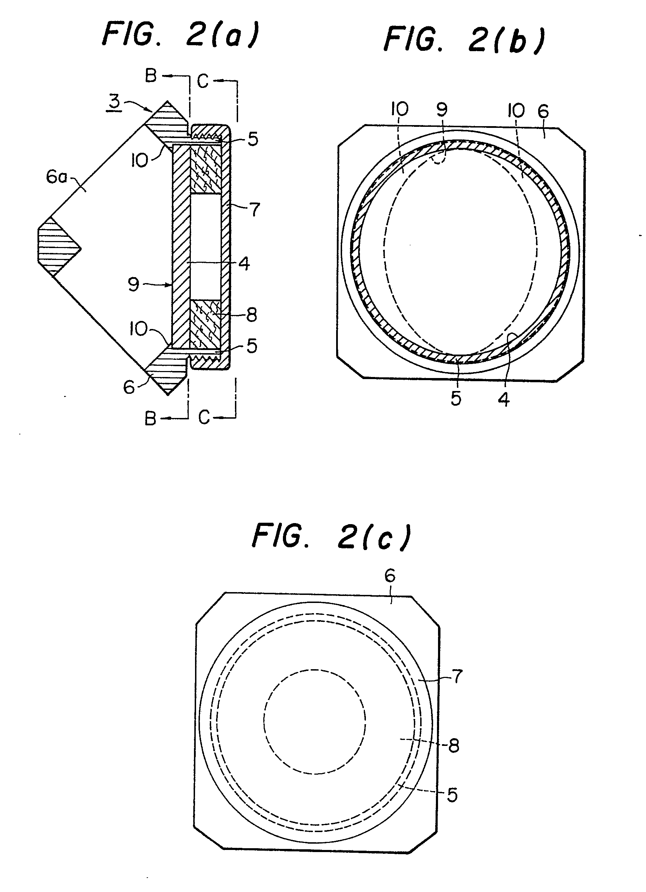

A mirror holder 3 according to the invention, as shown in Fig. 2, comprises a holder body 6 having a bent path 6a which is bent perpendicularly and is in communication with light conducting paths 1a and 2a (Fig. 1), and a mounting portion 5 which is used to mount a light bending mirror 4 at the corner of the bent path 6a; a cap 7 which is screwed on the mounting portion; and a packing 8 interposed between the mirror 4 and the cap 7.

In the holder body 6, a reflecting surface 9 forming a 45° angle with respect to the incident optical axis is provided at the corner of the bent path 6a, so as to perpendicularly bend a light beam emerging from the light conducting path 1a. Since the bent path 6a is circular in section in correspondence to the light conducting paths 1a and 2a, the reflecting surface 9a is in the form of an ellipse as indicated by the broken line in Fig. 2(b). The holder body 6 has a seat surface 10 outside of the reflecting surface 9, which is brought into contact with the mirror when the latter is mounted. The mounting portion 5, which is provided for mounting the mirror 4, is in the form of a cylinder which has an inside diameter slightly larger than the major axis of the elliptic reflecting surface 9 and is protruded slightly from the holder body 6. The outer wall of the mounting portion 5 is threaded so that the cap 7 can be screwed onto the mounting portion 5.

The mirror 4 is circular so as to be placed in the mounting portion 5. The mirror 4 provides the reflecting surface when placed in the mounting portion 5.

The cap 7 consists of a circular plate for covering the opening of the mounting portion 5, and a ring integral with the circular plate, the ring having female threads cut in its inner wall, which are engaged with the male threads cut on the outer wall of the mounting portion 5.

The packing 8, which is interposed between the mirror 4 in the mounting portion 5 and the cap 7, is in the form of a ring which has an outside diameter large enough to place the packing in the mounting portion 5. The thickness of the packing 8 is so selected that, on screwing the cap 7, the packing 8 is pushed by the circular plate of the cap 7 to thereby uniformly press the rear surface of the mirror 4.

As the cap 7 is screwed, the circular plate of the cap 7 uniformly presses the rear surface of the mirror 4 through the packing 8 as described above, as a result of which the mirror 4 is fixedly placed in the holder body 6 while being uniformly depressed.

In the above-described embodiment, the packing 8 is made of a rubber sheet; however, other packings such as for instance an "O" ring may be employed if they perform the same function.

As is apparent from the above description, the mirror holder according to this invention has a cap which is screwed onto the mirror mounting portion, and the rear surface of the mirror can be uniformly held through the packing by screwing the cap. Therefore, very little error occurs in the reflection angle of the mirror. The mirror can be quickly replaced merely by turning the cap. In the case of this mirror holder, unlike the conventional one, no screws are used to mount the mirror, and therefore the hazard that the heads of the screws are protruded as in the conventional one is eliminated, and the external appearance is improved.

WHAT IS CLAIMED IS:

1. A mirror holder for mounting a light bending mirror at the bend in a light conducting pipe adapted to conduct a light beam, said mirror having a front surface for reflecting said beam and a rear surface, said holder comprising:

a holder body defining a bent path and having first and second ends communicable with respective first and second light conducting pipe portions, and a mirror mounting portion for mounting said mirror at the apex of said bent path;

a cap screwable onto said mirror mounting portion; and

a packing disposed between cap and said mirror so as to uniformly press said rear surface of said mirror as said cap is screwed onto said mirror mounting portion.

2. A mirror holder as claimed in claim 1, wherein said holder body includes a seat facing said cap for engaging said mirror, said seat defining a substantially elliptical aperture.

3. A mirror holder as claimed in claim 1 or 2, wherein said packing is of annular shape with a circumference at least substantially as large as the circumference of the portion of said front surface of said mirror which reflects said light beam when said mirror is mounted.

4. A mirror holder as claimed in claim 3, wherein said circumference of said packing is substantially equal to an inside diameter of said mirror mounting portion.

-7-

5.　　　A mirror holder as claimed in claim 1, wherein said packing is of a rubber material.

**FIG. I(a)**

**FIG. I(b)**

**FIG. I(c)**

# FIG. 2(a)

# FIG. 2(b)

# FIG. 2(c)